(19) Europäisches Patentamt / European Patent Office / Office européen des brevets

(11) **EP 3 644 637 B1**

(12) **EUROPEAN PATENT SPECIFICATION**

(45) Date of publication and mention
of the grant of the patent:
**25.03.2026 Bulletin 2026/13**

(21) Application number: **18201791.3**

(22) Date of filing: **22.10.2018**

(51) International Patent Classification (IPC):
**H04W 12/10** (2021.01)

(52) Cooperative Patent Classification (CPC):
**H04W 12/10**

(54) **3GPP DATA INTEGRITY PROTECTION**

3GPP DATENINTEGRITÄTSSCHUTZ

3GPP PROTECTION D'INTÉGRITÉ DES DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2020 Bulletin 2020/18**

(73) Proprietor: **Koninklijke Philips N.V.
5656 AG Eindhoven (NL)**

(72) Inventor: **BERNSEN, Johannes Arnoldus Cornelis
5656 AE Eindhoven (NL)**

(74) Representative: **Philips Intellectual Property &
Standards
High Tech Campus 52
5656 AG Eindhoven (NL)**

(56) References cited:
WO-A1-2018/182482      US-A1- 2010 293 372

- "3rd Generation Partnership Project; Technical Specification Group Services and System Aspects; Study on Enhanced General Packet Radio Service (EGPRS) access security enhancements with relation to cellular Internet of Things (IoT) (Release 13)", 3GPP STANDARD ; TECHNICAL REPORT ; 3GPP TR 33.860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V13.1.0, 23 June 2016 (2016-06-23), pages 1 - 46, XP051295203

**Description**

FIELD OF THE INVENTION

The invention relates to a user device arranged for wireless communication in a cellular network and integrity methods for use in a system for wireless communication.

The present invention relates to the field of data integrity protection for user devices in wireless mobile communication systems, further called cellular networks, e.g. 3G, LTE, 4G or 5G networks. Access to cellular networks is managed by so-called providers, which provide access to cellular networks for the user devices via base stations according to a communication protocol. The user devices, usually called user equipment (UE) or mobile devices, are not only mobile phones, but any device connected through the communication protocol with the base station, such as IoT devices, cars with cellular radios, etc.

Further development of cellular networks is currently discussed between various parties called 3GPP that define new generations and extensions of the existing cellular networks. The 3rd Generation Partnership Project (3GPP) is a collaboration between groups of telecommunications standards associations, known as the Organizational Partners.

US 2010/293372 A1 discloses a method for authenticating messages in a communication network, which includes forming a super message having a plurality of individual messages such that at least two of the individual messages are intended for separate receiving entities. The method further includes creating a message authentication code (MAC) using a private key, such that the MAC is configured to permit authentication of the super message using a public key. The MAC may replace a CRC to minimize overhead caused by integrity protection.

Furthermore, "3rd Generation Partnership Project; Technical Specification Group Services and System Aspects; Study on Enhanced General Packet Radio Service (EGPRS) access security enhancements with relation to cellular Internet of Things (IoT) (Release 13)", 3GPP STANDARD; TECHNICAL REPORT; 3GPP TR 33.860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20160623), vol. SA WG3, no. V13.1.0, pages 1 - 46, XP051295203 discloses integrity protection where a sender computes a message authentication code (MAC) based on input parameters using an integrity algorithm. The MAC is then appended to a message when sent. For integrity protection algorithms the receiver computes an expected message authentication code (XMAC) on the message received in the same way as the sender computed its message authentication code on the message sent and verifies the data integrity of the message by comparing it to the received MAC.

BACKGROUND OF THE INVENTION

Legacy wireless communication systems like GSM/GPRS provide security but no explicit integrity protection of either user plane data or control plane data. User plane data is (in most countries) encrypted, but this still provides very limited protection against a Man-In-The-Middle attacker changing that data en route, because encryption is linear (a stream cipher) and any checksums like CRC (Cyclic redundancy check) are also linear. A man-in-the-middle may also insert user data, which may consume the credit of the user as one adverse effect. UMTS and LTE include cryptographic integrity protection of most of the signaling messages, but not for user plane data. For the Internet of things (IoT) tailored GPRS ('Enhanced-Coverage GSM', 3GPP Release-13), however, user plane integrity protection was added, partly due to different security threats for user plane data for IoT compared for the human usage for which GSM-LTE were mainly tailored.

If data integrity is needed, it may be enforced at the transport or application layer (typically also with additional encryption). In this case the security endpoints will align with the service endpoints - typically either a server on the internet or (for phone calls, messages etc.) another device. Adding another layer of integrity on the radio interface serves little purpose as far as protecting the traffic is concerned.

However, there may be cases in which transport or application security conflict with performance constraints (latency, battery life), and bearer level integrity provides a useful compromise. Also, there is a risk of a session as a whole being hijacked, and used to insert quantities of rogue data into a mobile connection (either to increase subscriber bills, or to waste resources carrying the data to the service end-point, where it will be rejected anyway).

So, in the current wireless communication systems, data between the user device and the base station on the User Plane may be encrypted, but is not sufficiently integrity protected.

SUMMARY OF THE INVENTION

The use of Message Authentication Codes may be appropriate for packets that should be received 100% correctly (after any error correction). Bit errors are common in cellular transmissions. However, user plane traffic may still be valuable when received with a few bit errors, and should not be rejected just because one or two bits are wrong; voice and video codecs tend to be error tolerant, for instance, or else there may be error correction at a higher layer.

Adding the above, known integrity protection to messages also means adding extra bits to the messages, thereby lowering the effective data rate. In general, separately adding integrity protection also changes the error behavior of the system, since more errors are detected than can be done with CRC checks, more retransmissions are required, while a certain error rate is not a problem in many circumstances, e.g. during voice telephony, but the latency is. Also, a CRC cannot detect all errors, for example a 24-bit CRC will have a probability of not detecting an error of $2^{-24}$. CRC algorithms are carefully designed to detect the most important errors, while not detecting errors that matter less for a good communication. So, it is important for many applications that the checksums and bit error behavior of a link are not changed.

It is an object of the invention to provide integrity protection to data transmission on links of wireless communication systems like the 3GPP links between base stations and mobile devices, which protection does not add any bits to the stream and which protection does not change the bit error behavior of the system.

For this purpose, devices and methods are provided as defined in the appended claims. According to an aspect of the invention a user device is provided as defined in claim 1. According to a further aspect of the invention there is provided an integrity device for use in a base station as defined in claim 12. According to a further aspect of the invention there are provided methods as defined in claim 13 and 14. According to a further aspect of the invention there is provided a computer program product downloadable from a network and/or stored on a computer-readable medium and/or microprocessor-executable medium, the product comprising program code instructions for implementing the above method when executed on a computer.

The user device is arranged for wireless communication in a cellular network, as described above. The communication protocol defines data blocks on a link between the base station and the user device, while the data blocks comprise user data and checksum fields, and checksums for error detection in the user data in the data blocks. The user device has a transceiver, a processor and an integrity unit for providing data integrity of the data blocks. The processor is arranged to manage data transfer on the link to the base station using link data regarding a sequence of the data blocks across the link, the link data being different for each data block in the sequence. After a certain period in time, the link data may repeat, e.g. due to frame numbers using a limited number of bits. The data blocks in such a repetition period are considered a sequence of data blocks with respect to the integrity protection. The processor is further arranged to obtain a secret integrity key that is shared with the base station.

The integrity unit is arranged, for a respective data block, to cryptographically process, while using the secret integrity key, a combination of the checksum for a predetermined one of the checksum fields and a predetermined part of the link data. Then the cryptographically processed combination is truncated to the length of the checksum as defined by the communication protocol, and the truncated cryptographically processed combination, simply called truncated combination hereafter, is used for error detection and integrity protection. Thereto, the truncated combination is inserted in the predetermined one of the checksum fields before transmitting a data block and compared to a value in the predetermined one of the checksum fields after receiving a data block.

The above features have the following effects. The truncated combination enables to detect transmission errors and integrity errors by performing the same cryptographic processing at the sender and the receiver side, and subsequently comparing the results at the receiving side. Advantageously, as the truncated combination is inserted in a checksum field that originally contained the checksum, no additional bits are required for data transfer on the link when compared to a legacy communication system not having such integrity protection, while transmission errors are equally detected as the same checksum is used at the transmitting side and is recalculated at the receiving side.

In an embodiment, the communication protocol further defines an integrity frame number. The integrity frame number is arranged for sequentially counting frames or sequences of frames as transferred. In said cryptographic processing, the predetermined part of the link data comprises the integrity frame number indicative of a frame or frame sequence in which the block starts. Advantageously, a long period of non-repeating values may be achieved by adding a sufficiently long integrity frame number. Such a long period reduces the need for rekeying, i.e. establishing a new secret integrity key.

The methods according to the invention may be implemented on a computer as a computer implemented method, or in dedicated hardware, or in a combination of both. Executable code for a method according to the invention may be stored on a computer program product. Examples of computer program products include memory devices such as a memory stick, optical storage devices such as an optical disc, integrated circuits, servers, online software, etc.

The computer program product in a non-transient form may comprise non-transitory program code means stored on a computer readable medium for performing a method according to the invention when said program product is executed on a computer. In an embodiment, the computer program comprises computer program code means adapted to perform all the steps or stages of a method according to the invention when the computer program is run on a computer. Preferably, the computer program is embodied on a computer readable medium. There is also provided a computer program product in a transient form downloadable from a network and/or stored in a volatile computer-readable memory and/or microprocessor-executable medium, the product comprising program code instructions for implementing a method as described above when executed on a computer.

Another aspect of the invention provides a method of making the computer program in a transient form available for downloading. This aspect is used when the computer program is uploaded into, e.g., Apple's App Store, Google's Play Store, or Microsoft's Windows Store, and when the computer program is available for downloading from such a store.

Further preferred embodiments of the devices and methods according to the invention are given in the appended claims.

BRIEF DESCRIPTION OF THE DRAWINGS

These and other aspects of the invention will be apparent from and elucidated further with reference to the embodiments described by way of example in the following description and with reference to the accompanying drawings, in which

Fig. 1 shows a user device and a base station for wireless communication in a cellular network,
Fig. 2 shows an integrity method for use in a user device arranged for wireless communication via a base station in a cellular network,
Fig. 3 shows an integrity method for use in a base station arranged for wireless communication to a user device in a cellular network,
Fig. 4a shows a computer readable medium, and
Fig. 4b shows in a schematic representation of a processor system.

The figures are purely diagrammatic and not drawn to scale. In the Figures, elements which correspond to elements already described may have the same reference numerals.

DETAILED DESCRIPTION OF EMBODIMENTS

An example of a communication protocol in a wireless communication system of a cellular network and user equipment in need for data integrity protection is described in release 15 of the LTE (Long-term Evolution), LTE Advanced and LTE Advanced PRO mobile communication technology specifications. The 3GPP (Third Generation Partnership Project) organization is responsible for these specifications. Now follows an overview of that system and the communication protocol in so far as relevant for applying the proposed data integrity protection, which overview is based on an excerpt of parts of [36211-R15], [36212-R15] and [36213-R15].

The following is a brief overview of LTE communication between a base station in a cellular network and user devices (UEs, User Equipment, in 3GPP terminology) in range of the base station. Down link (DL) traffic is generated by a base station in a cellular network and received by UEs and uplink (UL) traffic is sent by a user device to a base station. Part of the DL information is information that the UEs need to understand the rest of the DL information, e.g. the Master Information Block (MIB) and System Information Blocks 1 to 20 (SIB1 - SIB20). Part of the DL traffic indicates when, with which modulation and with which frequencies a UE may send data to the base station. Part of the UL traffic from a device may be user plane data but also control data like retransmission requests and requests for uplink transmission schedules. This is all coordinated in a base station by a scheduler (described below) that considers channel conditions, link quality with the devices, the amount of data waiting to be sent to a UE, the amount of data waiting to be sent in each UE, etc. All data is sent using OFDM symbols. The amount of data per OFDM symbol varies per modulation method from 1 bit for Binary Phase Shift Keying (BPSK) to 10 bits for 1024 QAM (Quadrature Amplitude Modulation).

Regarding terminology we use the term "base station" here, where the 3GPP specifications use the term "E-UTRAN Node B" or "evolved Node B" (eNodeB). Note that in 3GPP, a base station is substantially equivalent to an eNodeB, although eNodeB is a logical node in the 3GPP architecture and a base station is a physical implementation. One eNodeB may be responsible for all radio-related functions in one cell or several sector cells (e.g. three 120-degree or four 90-degree sector cells) of one base station or one eNodeB may be handling a large number of indoor cells in a building. We may use the term mobile device here where the 3GPP specifications use the term User Equipment (UE).

The term "data block" in the wireless communication system and provided with integrity protection as proposed represents any logically organized amount of user data that is transceived as a structured entity between a base station and a user device. The structured entity defines how user data is represented by the transceived data bits, and some control data at least including a checksum field for inserting a checksum. The checksum may be calculated across all or a part of the user data of the data block, as defined by the communication protocol. So, the data blocks at least include user data and checksum fields.

A checksum is a value derived from a block of data for the purpose of detecting errors. The more bits the value consists of, the more bit errors can be detected. Checksums do not detect all errors. E.g. for a 24-bit checksum, the probability of a random input to have a certain checksum value is $2^{-24}$. So, if no error is detected in a block of data by a 24-bit checksum, which block of data is larger than the minimum length for the checksum to function, there is still a 2^-24 probability that the input has been received erroneously. This small probability is ignored and not mentioned further saying "all errors are detected" or "without errors" in this application. A CRC (Cyclic Redundancy Check) is one of the algorithms that can be used as a checksum.

In the exemplary system as further described below, such a data block may be in one subframe. Different data blocks of the same user may be in different subframes. A data block also may be a Transport Block containing user data, or the data blocks may be equal to Code Blocks. So, the proposed integrity protection may be applied to any data block containing user data and checksums related to user data at various levels in the system, while in addition there may also be other blocks not containing user data, or blocks not provided with the proposed integrity protection.

The communication is arranged according to a communication protocol that includes a detailed description of the wireless data transmission, also called a transmission format. In the exemplary system, the transmission format the organization in time may be as follows, using time slots. A slot in LTE has a duration of 0.5 ms. Seven, in case of normal cyclic prefix, or six, in case of extended cyclic prefix, successive OFDM symbols can be sent in a slot. Other OFDM symbol groupings are also possible in a slot. Two successive slots make up a subframe of 1 ms. Ten subframes make up a frame of 10 ms. The UEs need to synchronize with a base station, so they know when a slot, subframe and a frame starts. The length of a subframe is also called a transmission time Interval (TTI) and is thus 1 ms in length. The frames are numbered modulo 1024, so from 0 to 1023 by a base station. This number is called the System Frame Number (SFN) and is transmitted by the base station in the Master Information Block (MIB).

To reduce the device power consumption, LTE has introduced mechanisms for discontinuous reception (DRX). This requires a longer interval than can be indicated with the SFN, so the 10-bit hyper-SFN (HSFN) was introduced for this. The HFSN value is provided by the base station in the SIB1. The SFN carries over every 1024* 10 ms, which is every 10.24 seconds. The HSFN carries over about every 2 hours and 55 minutes.

In the transmission format the organization in frequency may be as follows. Many OFDM symbols can be sent in parallel, each on their own subcarrier. In general, subcarriers are spaced 15 kHz apart. If the subcarrier spacing is less than 15 kHz, the OFDM symbols are stretched so they require less bandwidth and a smaller number than 6 or 7 fits in one slot.

In the transmission format the logical organization may be as follows, using a so-called resource grid of resource elements. A Resource Element (RE) is one OFDM symbol on one particular subcarrier. A group of 12 successive subcarriers and all OFDM symbols in one slot is called a Resource Block that consists of 12 in frequency consecutive REs. RBs may consist of e.g. 72 or 84 OFDM symbols. The two successive RBs in a slot may be referred to as a resource block pair. The resource grid is a grid of REs with the consecutive subcarriers in the frequency direction and successive slots in the time direction. The minimum number of subcarriers per LTE (component) carrier is 6*12 (roughly 1 MHz) and the maximum number is 110*12 (roughly 20 MHz). The number of RBs in an LTE (component) carrier is signaled in the Broadcast Channel (BCH) transport channel.

In the transmission format the data organization may be as follows. A scheduler in the base station is arranged for formatting and transferring user data in blocks, and is described further below. For down-link traffic, the MAC layer in a bases station is responsible to hand over data to the Physical layer in so-called Transport Blocks. Depending on the data in a Transport Block, the MAC indicates to the Physical Layer which Transport Channel to use. Some REs have a fixed purpose and cannot be used by the scheduler. The minimum scheduling unit for the scheduler is a resource block pair.

In the transmission format wireless transceiving of the data may be as follows, using so called antenna ports. In LTE multiple antennas can be used to improve the transmission of one data stream, but may also be used to transmit several concurrent data streams on the same LTE (component) carrier. The latter is called spatial multiplexing. The concept of antenna ports is introduced in LTE for the latter. If e.g. two antenna ports are used for DL traffic, the number of bits available in a downlink RB is approximately doubled, see e.g. Table 7.1.7.2.2-1: "One-layer to two-layer TBS translation table" in [36213-R15].

Also, for transmission said carriers may be aggregated. Several LTE component carriers (sets of subcarriers of up to 20 MHz bandwidth) that are disjunct in frequency and that may even be in different frequency bands can be used together for sending data to one device. This is called carrier aggregation. The scheduling of RBs is done per carrier. The maximum number of LTE component carriers that can be aggregated is 32 for the current release of the 3GPP specifications. The LTE terminology for a carrier in case of carrier aggregation is "component carrier". In case of carrier aggregation and cross-carrier scheduling (i.e. the schedule of one component carrier is sent via another component carrier), each component carrier gets a unique component carrier number called the carrier indicator.

On the physical transmission layer, the cellular network is organized in cells having a physical cell identity, as follows. There are 504 different physical-layer cell identities defined for LTE. The 504 cell identities are subdivided into 168 cell-identity groups, which each consist of three cell identities. Using the primary synchronization signal (PSS), a mobile device can determine among other things the cell identity within the cell-identity group and the position of the secondary synchronization signal (SSS). A mobile device can determine the cell-identity group number from the SSS, as well as the frame timing. The physical-layer identity is only meant to be able to identify and separate data coming from different transmitters. The same physical-layer cell identity can be used in two cells that are separated such that they cannot be within reach from the same mobile device.

A cell may be identified by an ECGI within a Public Land Mobile Network (PLMN). In the format, an information element called CellGlobalIdEUTRA specifies the Evolved Cell Global Identifier (ECGI), the globally unique identity of a cell in the Evolved Universal Terrestrial Radio Access system, and is the concatenation of a PLMN ID and the Cell Identity. A PLMN is identified by a PLMN ID, which is carried in SIB1 and consists of the three decimal digits Mobile Country Code (MCC) and the two or three decimal digit Mobile Network Code (MNC). The 28-bit information element CellIdentity is carried in SIB1 and is used to unambiguously identify a cell within the PLMN. The first 20 bits are sometimes called the eNodeB identifier (eNB ID) and the last 8 bits the sector identifier.

In the transmission format the organization in data blocks is as follows. Transport Blocks are the basic units of data that are exchanged between the MAC (Medium Access Control) layer and the PHY (physical) layer. Seen from the upper layers, each Transport Block contains only a specific type of data from/to the upper layers, e.g. one transport block can only certain control data or can only user data to/from a specific device. So as an example, if data needs to be sent downlink to three devices and uplink from two devices, five different Transport Blocks are required in addition to the Transport Blocks that are needed for the system data.

The PHY layer selects the Transport Channel to use based on the specific type of data in a Transport Block. E.g. a TB containing user data for a specific device is sent on the transport channel called DL-SCH (downlink - shared channel), a TB containing user data from a specific device for the base station is sent on the transport channel called UL-SCH (uplink - shared channel) and the transport channel called BCH (broadcast channel) is used for communicating certain system information, e.g. the Master Information Block (MIB).

The scheduler in LTE is part of the MAC layer, but since it has connections with several other layers, it can best be seen as a separate entity. The scheduler controls the assignment of uplink and downlink resources in units of resource block pairs. The scheduler schedules resource block pairs for each subframe (1 ms), which time is also called a transmission time Interval (TTI). The details of the schedule that are dynamic are sent in specific resource elements at the start of each subframe, so all devices in a cell know the complete schedule for that subframe and know when they can send or receive data.

The scheduler knows the best modulation method possible in the current subframe for each resource block pair from the PHY so knows how much data can be transferred in each resource block pair. The scheduler knows how much downlink data for each specific type of data is waiting for the transport channels and how much data is waiting to be sent to the base stations by which mobile devices in the cell. Based on this information, the scheduler decides which data can be sent downlink, how many transport blocks are needed for this and how many resource block pairs are assigned to each transport block. The scheduler also schedules Transport Blocks for uplink traffic and assigns them to the devices that need them for uplink traffic.

If more than one Resource Block per slot is scheduled for a Transport Block, the Resource Blocks scheduled are consecutive in frequency of the subcarriers for their Resource Elements. The same resource blocks in the frequency dimension are used for the first and second slot of a subframe. Therefore, the number of the resource block using the lowest frequency can be used as an identifier for the transport block in this subframe and this is called starting resource block (RBstart). Of course, the highest frequency or mean frequency could also be used for this purpose. The scheduler knows the starting resource block of each transport block. Devices can determine the starting resource block for the transport blocks assigned to them as well as the transport block size from the scheduling information sent by the base station in the resource elements dedicated to the scheduling information. In the case of carrier aggregation, transport blocks only consist of resource blocks on one component carrier.

It is to be noted that for data on the user plane to be sent downlink to a specific device, at most one transport block per subframe can be scheduled in case there is no spatial multiplexing and at most two when there is spatial multiplexing, with multiple transmission layers in parallel to the same device by using more than one antenna. The same is true for uplink data from each device.

With regard to error protection in such a system the blocks are provided with checksums, usually a cyclic redundancy check (CRC). Various formulas may be defined for respective different blocks in the communication protocol. In the exemplary transmission format, the maximum size of a Transport Block is, when it uses all 110 RBs in each of the two slots and 2 spatial streams and the modulation method with the highest number of bits per symbol. The latter is for TBS index 37, which yields a maximum Transport Block Size (TBS) of 137792 bits for one spatial stream (see Table 7.1.7.2.1-1: "Transport block size table (dimension $44 \times 110$)" in [36213-R15]) and a maximum Transport Block Size (TBS) of about 275600 bits for two spatial stream (see Table 7.1.7.2.2-2: "One-layer to two-layer TBS translation table" in [36213-R15]). In the case of one TB with 275600 bits, some 275600/6144 = 45 CRC calculations need to be done for each subframe, so about 45000 CRC calculations per second. Note that this does not include the CRC computations for the other spatial streams. Worst case, all TBs are 6144 + 1 bit large, so they have to be segmented into two CBs and thus requiring three CRCs per TB, one for the entire TB and two for the two CBs. This worst-case scenario would require three times as many CRC computations than required in the previous estimation.

For transceiving the blocks on the physical layer the following processing is required for coding of a transport block. The PHY is responsible for the downlink and uplink physical processing of transport blocks. In case of transmission of a transport block, the following sub-processes are performed.

1. CRC insertion over the entire TB
2. Segmentation
3. Coding
4. Rate Matching and Hybrid Automatic Repeat-Request (HARQ)
5. Scrambling
6. Modulation
7. Discrete Fourier Transform (DFT) pre-coding (only for uplink)
8. Antenna mapping

The PHY receiving a TB performs the inverse of each sub-process (e.g. CRC check instead of CRC insertion) in the inverse order. Of importance to the invention are the CRC insertion and segmentation processes. In the first step of the DL-SCH and UL-SCH physical layer processing (so for TBs carrying user data), a 24-bit CRC (Cyclic Redundancy Code) is calculated over the entire TB and appended to the TB. In other physical channels, a 16-bit CRC is calculated and appended. If the TB appended with the CRC is larger than 6144 bits, code-block segmentation is applied in the second step of the physical layer processing, resulting in the segmentation of the appended TB into smaller Code Blocks (CB). For each CB, a CRC is computed using a different algorithm than the one used in step 1 and appended to the CB. The CRC is 24 bit for the DL-SCH and UL-SCH transport channels and 16 bit for other transport channels.

During transmission, when errors are detected or blocks are not received, the communication protocol may define retransmission. In the exemplary system, this is called Hybrid Automatic Repeat Request (HARQ). When the base station or mobile device has computed a CRC and compared it to the CRC field in a TB or CB, it uses the Hybrid Automatic Repeat Request functionality to let the other party know the TB was received correctly or that it requests a retransmission of the TB. For DL the HARQ flow-diagram involves ACK/NACK for data packets transmitted in the downlink: the mobile device requests retransmission of incorrectly received data packets, as follows:

∘ ACK/NACK is transmitted in UL, either on the Physical Uplink Control Channel (PUCCH) or multiplex with the Physical Uplink Shared Channel (PUSCH);
∘ ACK/NACK transmission refers to the data packet received four sub-frames (= 4 ms) earlier.

For UL the HARQ flow-diagram involves the base station requesting retransmission of incorrectly received data packets, as follows:

∘ ACK/NACK is transmitted in the Physical hybrid-ARQ indicator channel (PHICH)
∘ ACK/NACK transmission refers to the data packet received four sub-frames (= 4 ms) earlier.

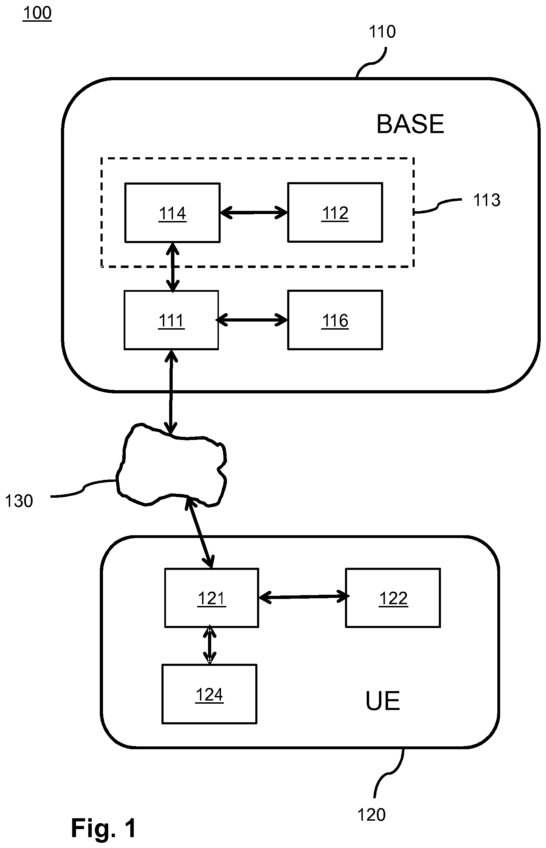

Fig. 1 shows a user device and a base station for wireless communication in a cellular network. In a communication system 100 a cellular network provides wireless communication 130 to the user device 120 via the base station 110 according to a communication protocol. The communication protocol defines data blocks on a link between the base station and the user device. The data blocks have user data and checksum fields, while the checksums are for error detection in the user data in the data blocks. The cellular network provides wireless communication for mobile devices across at least a regional area. As elucidated in the introduction, the cellular network may be a 3G, LTE, 4G or 5G cellular network.

The user device 120 has a transceiver 121 arranged for transceiving according to the communication protocol, and a processor 122 arranged to manage data transfer on the link to the base station using link data. The link data relates to a sequence of the data blocks that is transferred via the link. The link data is different for each data block in the sequence, while some parts may repeat for a subsequent sequence. Various examples of such link data have been presented above for an exemplary 3GPP system.

The processor 122 is further arranged to obtain a secret integrity key that is shared with the base station. Various mechanisms for establishing a secret key between two devices are known and may be used for securely exchanging such key data.

Diffie-Hellman, see reference document [DH], is a well-known technique for establishing a secret key between two parties, where the communication between the parties for establishing the secret key does not reveal any information to third parties on the established secret key. The two parties each use their own public/private key pair and exchange the public key with each other. Each party is able to compute the secret key using its own private key and the other party's public key and possibly some other information, e.g. a nonce (random number) from each party. Each party may generate a key pair anew each time it performs Diffie-Hellman or it reuses an older key pair.

The user device further has an integrity unit 124 for providing data integrity of the data blocks, the integrity unit being arranged to perform the following processes for a respective data block.

First, the integrity unit cryptographically processes, while using the secret integrity key, a combination of the checksum for a predetermined one of the checksum fields and a predetermined part of the link data. The cryptographic processing may, for example, be encryption or the application of a hash-based message authentication code (HMAC). Various examples are described below. The checksum may be calculated as defined in the communication protocol, and may be concatenated with a block number or block address, and optionally further link data, i.e. a predetermined selection of link data that varies from block to block. Further such combination may include padding data or a salt. A salt is random data that is used as an additional input to a cryptographic function that "hashes" data, such as a password or passphrase. Salts are closely related to the concept of nonce. The primary function of salts is to defend against dictionary attacks or against its hashed equivalent, a pre-computed rainbow table attack. If padding data or a salt is used, the value has to be shared between the base station and the user device. The value to use may be defined in a specification, e.g. a 3GPP specification. Alternatively, the base station may also send the value to use to user devices in e.g. a System Information Block. The value to use may be the same for all user devices or different per user device. Various examples of suitable varying link data are described below. So, a combination string of bits of a required length is formed to be cryptographically processed.

Secondly, the integrity unit truncates the cryptographically processed combination to the length of the checksum, which length is defined by the communication protocol. By said truncation, the truncated cryptographically processed combination now fits in the checksum field of the checksum as originally intended. For example, for a checksum field of n bits, truncation may be using the first n bits, the last n bits, or any predetermined selection or permutation of n bits of the cryptographically processed combination.

Finally, the integrity unit uses the truncated combination for error detection and integrity protection by inserting the truncated combination in the predetermined one of the checksum fields before transmitting. Similarly, while receiving data, the integrity unit uses the truncated combination by comparing a received value in the predetermined one of the checksum fields with the truncated combination as calculated on the received data and respective corresponding predetermined link data. When the received value is equal to the newly calculated value, the integrity of the data covered by the checksum is verified, while also ensuring that the data is without errors. Otherwise, even in the event of a single bit error or a single modified user data byte, the checksum would be different. Henceforth, the cryptographically processed combination will be very different. So, both transmission errors and intentional modifications of the user data will result in a different truncated cryptographically processed combination. So, manipulation of the user data during transmission, a so-called man-in-the-middle attack, is detected using the same number of bits from the checksum field. Also, the insertion of extra data by a man-in-the middle is made much more difficult because of the difficulty for the man-in-the-middle to guess the correct truncated cryptographically processed combination.

The base station 110 is arranged for wireless communication with the above user device. The base station has a transceiver 111 arranged for wireless communication, and an integrity device 113. Also, the base station has a link manager, usually called a scheduler, arranged to manage data transfer on the link to the user device using said link data regarding a sequence of the data blocks across the link. Most link data is generated and updated by the link manager, e.g. when registering the user device entering the cellular network or sector of the base station, when setting up the link, etc. Such a link manager and/or scheduler are well-known as such, while the 3GPP system as described above provides examples. Some link data may be determined at a lower, physical layer, or at some higher layer in the communication system, as is well-known as such.

In the base station, the integrity device 113 has a processor 112 arranged to obtain a secret integrity key that is shared with the user device. For example, the key is generated and subsequently securely transferred to the user device. As such, generating and sharing secret keys is well-known.

The integrity device also has an integrity unit 114 for providing data integrity of the data blocks. The integrity unit is arranged, for a respective data block, to perform the following processes for a respective data block. The processes are complementary to the processes described above for the user device, while data blocks are usually transferred in both directions (uplink and downlink).

First, the integrity unit cryptographically processes, while using the secret integrity key, a combination of the checksum for a predetermined one of the checksum fields and a predetermined part of the link data. So, a combination string of bits of a required length is formed to be cryptographically processed.

Secondly, the integrity unit truncates the cryptographically processed combination to said length of the checksum.

Finally, the integrity unit uses the truncated combination for error detection and integrity protection by, while transmitting data, inserting the truncated combination in the predetermined one of the checksum fields. Similarly, while receiving data, the integrity unit uses the truncated combination by comparing a received value in the predetermined one of the checksum fields with the truncated combination as calculated on the received data and respective corresponding predetermined link data.

In an embodiment of the user device 110, and a corresponding embodiment of the integrity device 113, the predetermined part of the link data comprises a block identity that is modified for subsequent data blocks in the sequence. The block identity, further also indicated by the acronym BlockID, consists of all the bits of predetermined the part of the link data and further components that make up the block identity, may, for example, be for a transport block or code block in the 3GPP system described above. The block identity may also be, or contain, a block address and/or other parts of the block header. Optionally, the block identity includes a frame number that is indicative of a frame in which the block starts when transferred via the link.

In an embodiment, the block identity comprises one of the following frame numbers, or a combination of multiple frame numbers. A first frame number is a subframe number indicative of a subframe in which the block starts, the subframe number counting subframes in a frame. A second frame number is a system frame number (SFN) indicative of a frame in which the block starts, the system frame number counting frames in a system frame sequence as transferred via the link. A third frame number is a hyper system frame number (HSFN) indicative of the system frame sequence in which the block starts, the hyper system frame number counting the system frame sequences as transferred via the link. Any of the above frame numbers changes, e.g. is increased, for a subsequent frame. In practice, such frame numbers are defined using a predetermined number of bits, and after reaching a maximum value of such bits, will restart at zero. This is usually called running over or repeating. The period of repeating depends on the number of frames transferred in a second.

For improved cryptographical protection, a long period of repeating is required. Thereto an additional frame number may be defined that has a large number of bits, or counts frame sequences of frames that have a repeating frame number like the above HSFN, or other lower order frame numbers like the above SFN or subframe numbers. Thereto, the communication protocol may additionally define an integrity frame number, for example called a Super System Frame Number (SSFN). The integrity frame number SSFN sequentially counts superframes or sequences of frames as transferred, such sequence using the HSFN. Also, the predetermined part of the link data includes the integrity frame number indicative of a frame in which the block starts.

In an embodiment, the processor (112, 122) is arranged to periodically obtain a new secret integrity key that is shared between the user device and the base station to renew the secret integrity key after a validity period. The validity period should preferably be less than, or equal to, a period over which time-related components of the predetermined part of the link data repeat. For example, when using the above integrity frame number SSFN, the secret integrity key should be renewed before the SSFN repeats. So, none of the truncated combinations during said validity period will use the same secret key and the same "predetermined part of the link data".

In embodiments of the integrity unit 124 in the user device, and correspondingly, of the integrity unit 114 in the base station, the predetermined part of the link data further comprises additional varying link data or transmission data that needs not to be unique, but still varies in practice while it cannot be easily changed by a man-in-the-middle attack, as it is used in further communication processes. The options below are further elucidated later.

Optionally, the predetermined part of the link data further includes varying link data comprising at least one, or a combination of multiple, of the following data elements:

- a slot number indicative of a transmission slot in which the block starts, for example a subframe being divided into two transmission slots,
- the length of the block,
- a control value indicative of a block type of the block to which the checksum relates, for example the block types being a code block (CB) and a transport block (TB),
- a control value indicating whether the block is the first or second block to or from a device in a current subframe,
- a control value indicating whether the data block is sent uplink or downlink.

Furthermore optionally, the predetermined part of the link data may include transmission related link data comprising at least one, or a combination of multiple, of the following data elements:

- a control value indicative of a number of a spatial stream or an antenna port number of spatial multiplexing used for transferring the block,
- a carrier indicator indicating a carrier on which the block is transferred on using carrier aggregation,
- a control value indicating a lowest or highest frequency of subcarriers used for the data block,
- a control value indicating a number of subcarriers used for the data block,
- a control value indicating a number of resource blocks used for the data block,
- a network identity (PLMN ID) or cell identity (CellIdentity) of a current cell within the cellular network accommodating the link,
- an evolved cell global identifier representing a combination of a network identity and a cell identity of the cellular network accommodating the link,
- a physical layer cell identity of the cellular network accommodating the link,

- a base station name of the base station accommodating the link.

Also, in embodiments of the integrity unit 124 in the user device, and correspondingly, of the integrity unit 114 in the base station, the communication protocol further defines multiple different types of data blocks comprising transport blocks (TB) and code blocks (CB), and multiple different types of checksums corresponding to the multiple different types of data blocks. Correspondingly, the predetermined part of the link data comprises different block numbers that are changed, e.g. incremented, for subsequent data blocks of the respective types in the sequence. Optionally, only the transport blocks are provided with the cryptographically processed checksum data, while code blocks are provided with the traditional checksums. Effectively integrity protection is achieved on the transport block level, while the amount of cryptographic processing is significantly reduced as the checksums of the code block need not be cryptographically processed.

In an embodiment, the processor (112,122) is arranged to obtain an integrity indicator that is shared with the base station, which integrity indicator indicates whether the checksum fields comprise the checksum or the truncated combination. Correspondingly, the integrity unit (114,124) is arranged, for a respective data block, to apply the integrity protection in accordance with the integrity indicator. Thereto, when the indicator indicates that the checksum is used, the checksum is inserted in the predetermined one of the checksum fields before transmitting the data block and a value in the predetermined one of the checksum fields is compared with the checksum after receiving the data block. Alternatively, when the indicator indicates that the integrity protection is used, the truncated combination is inserted in the predetermined one of the checksum fields before transmitting the data block and a value in the predetermined one of the checksum fields is compared with the truncated combination after receiving the data block.

Optionally, the above integrity indicator indicates whether to apply the integrity protection in one or more of the following cases:

- uplink traffic towards the base station;
- downlink traffic from the base station;
- separate for each user device in communication with the base station;
- separate for different types of data blocks.

Correspondingly, the integrity unit is arranged, for a respective data block, to apply the integrity protection in accordance with the integrity indicator.

In practice, somewhere in the transmission of a base station it may be stated whether the integrity protection is used or not. This may be separate for uplink and downlink traffic, and this may be separate for each device within range of the base station and this may be separate for each TB or for each TB type. The bit or bits of the integrity indicator for the signaling must preferably be integrity protected themselves. This can be done with the integrity protection already specified for the control plane data in LTE.

The following text describes how to implement the integrity protection, using the above 3GPP cellular network as an example. In the exemplary system, the CRC over the Transport Blocks and the Code Blocks is replaced with a truncated keyed hash function or truncated encryption function on the CRC combined with further link data. The encryption function may, for example, be AES encryption in Electronic Codebook Mode (ECB) as described in [AES] and [MODES]. A keyed hash function may be a hash-based message authentication code (HMAC) e.g. HMAC-SHA256 from [RFC 2104]. The combination of CRC and further link data may be a concatenation A | B, which denotes concatenation of the bits of A and B and optionally some padding, which may be a bit pattern known to sender and receiver such that CRC | padding consist of a required number of bits of a cipher block size, e.g. 128 bit for AES. So, the padding can be any bit pattern known to sender and receiver, e.g. as specified in a specification, but such that the total number of bits is equal to the block size of the cipher (e.g. 128 bit for AES).

The secret integrity key K should be different per user device (UE). If it would be the same for all transmissions by a cell, the attacker could use a modified UE with a proper subscription to obtain K from the cell transmissions addressed to it. The key K has to be provided in a secure manner to the mobile device. There are many known ways to create a secure channel to a mobile device, e.g. using the (U)SIM card in the mobile device.

Both examples below have the same error behavior as when using the CRC itself. If the CRC is incorrect, so will the CRC' and vice versa. So, under exactly the same conditions, an error in a transport block is detected and a retransmission is requested using HARQ when using the CRC' as when using the CRC itself.

The function to compute the CRC' should be chosen such that it is computationally not expensive, so that the CRC' computation time is acceptable using the available processing power. The CRC/CRC' check after all must result within milliseconds in a retransmission and there are many CRCs/CRC's to compute per sub frame. It is estimated that 45 - 150 thousand CRCs may need to be computed per second per full 20 MHz component carrier.

Only using the CRC would not be sufficient from a security point of view. First of all, the CRC' is only 24 bit for user plane data, while a state-of-the-art HMAC is at least 128-bit. A second problem is that an attacker can build up a CRC to CRC' translation table by observing the transmission of many TBs to and from a device, compute the CRC and note the CRC' actually used. So, the security properties of the CRC' are enhanced by concatenating BlockID, i.e. said predetermined part of the link data that varies per data block, which is added to the input of the cryptographic function, e.g. a block number or identifier, as expressed by

$$CRC' = \text{truncate}_{CRC\text{-length}}\{ \text{crypto\_function}( K, CRC \mid BlockID \mid padding ) \}$$

In the formula, A | B denotes the concatenation of the bits of A and B and where the padding can be any bit pattern known to sender and receiver such that the total number of bits is equal to the block size of the crypto- function, if the crypto function only operates on inputs of a fixed block size. In particular, when the crypto function is a keyed hash function like HMAC or a symmetric encryption function like AES, we get

$$CRC' = \text{truncate}_{CRC\text{-length}}\{ HMAC( K, CRC \mid BlockID ) \}$$

and

$$CRC' = \text{truncate}_{CRC\text{-length}}\{ AES_e( K, CRC \mid BlockID \mid padding ) \}$$

In the last formula, the padding may be any bit pattern known to sender and receiver, but such that the total number of bits is equal to the block size of AES (128 bit). As HMAC can operate on any length input, no padding is required there.

The BlockID can be the concatenation of many components. Link data may include the following components to make CRC' values unique in time at least during sequence of blocks:

- the subframe number (0 - 9) that the TB starts in,
- the System Frame Number (SFN) (0 - 1023) that the TB starts in,
- the hyper-SFN (HSFN) (0 - 1023) that the TB starts in (when HSFN is used),
- a (new) integrity sequence number SSFN similar to the hyper-SFN (HSFN) and made available in a system message to all devices in a cell similar to the way the HSFN or the SFN is made known,

Varying link data may include the following components that help make a CRC' values unique in time:

- the slot number (0 or 1) of the slot the TB starts in, which is only useful if TBs can start in the second slot of a sub frame,
- the length of the TB in bits,
- a bitpattern indicating whether the CRC/CRC' is for the entire TB or for a CB,
- a bitpattern indicating the CB number in case the CRC/CRC' is for a CB,
- a bitpattern indicating whether the TB is the first (0) or second (1) TB to/from a device in this subframe,
- a bitpattern indicating whether the TB is sent uplink or downlink,
- etc.

Transmission related link data may include the following components that help make a CRC' values different:

- a bitpattern indicating the lowest (or highest) frequency of all sub carriers used for the entire TB,
- a bitpattern indicating the number of subcarriers and/or Resource Blocks used for the entire TB,
- a bitpattern indicating the number of the spatial stream or the antenna port number in case of spatial multiplexing,
- a bitpattern indicating the carrier indicator indicating the carrier this TB is transferred on in case of carrier aggregation,
- a bitpattern indicating PLMN ID, or Cell Identity,
- a bitpattern indicating Evolved Cell Global Identifier = PLMN ID concatenated with the Cell Identity,
- a bitpattern indicating the physical layer cell identity (0 - 503),
- a bitpattern indicating the base station name (or in 3GPP terms, the eNodeB name) as transmitted by the base station in System Information Block 9 (SIB9), which SIB is transmitted over the DL-SCH,
- etc.

The components from the above sets can also be combined using any other function than concatenation to compute the BlockID, but concatenation of bits is an easy way. Other ways may be to select a predetermined substring of bits, or a predetermined selection of individual bits, or any predetermined logical combination of the selected components.

Note that the correct value of the above components has to be known by the receiver otherwise the TB cannot be received correctly anyway even without the use of the new CRC'. So, the error statistics are unaffected by applying the new CRC' using the above components for the BlockID.

In case only the subframe number and the SFN would be used for the BlockID, the BlockID repeats after 10.24 seconds. This means that in case all other measures are taken to make a CRC' unique in one slot, an attacker who has learned a CRC <-> CRC'|BlockID combination in a 10.24 second period can use that combination to forge a TB in any of the following 10.24 second periods. This can be prevented by rekeying of the key K, but 10.24 seconds is very short for rekeying. The addition of the HSFN will lengthen the period of BlockID repetition to about 2 hours and 55 minutes. That is still a bit short for rekeying.

The addition of the Transport Block size will definitely help making the CRC' unique for different subframes with the same combination of subframe number and SFN, but lengths may also repeat. Therefore, it is proposed that together with the CRC', a Super System Frame Number (SSFN) is introduced of more than 10-bit that is incremented each time that the SFN rolls over and which is reset to 0 in case a new key K has to be used by all users for the decryption of the CRC'. This new SSFN can be made available in similar ways as the SFN (through extension of the MIB) or the HSFN (through extension of SIB1, extension of any of the other existing SIBs, or a through a newly defined SIB). A 13-bit SSFN leads to a repetition rate of about once per day if the HSFN is not used and to a repetition of once every 2.7 year in case the HSFN is used.

It is noted that 'only 24 bit' for the new CRC' due to the length of the checksum field may be perceived as a security problem. However, the CRC' is proposed for use on a link between a base station and a mobile device. If the key K is rekeyed before the BlockID repeats itself and if a substantial selection of the components proposed above are used so that the BlockIDs to/from a particular device are always unique for all TBs in the same slot, the attacker is not able to build up a table relating CRC values and corresponding CRC' values. Therefore, an attacker has only a 2^-24 probability of inserting a message on the data plane to/from a particular mobile device with a correct CRC', assuming that the attacker does not have the key K. Hence, a proper integrity protection of the user data on the link is achieved.

In an embodiment a period for rekeying is set in relation to the period in which the BlockID may repeat. The key K will have to be rekeyed before this period ends. If it is done after this period has ended, an attacker may forge a TB using a CRC and Transport Block ID that is the same as one transmitted in the previous period, so the attacker knows the CRC' without having to know the key K. The key K has to be rekeyed well before the repetition period ends, so the recipient can install the new key. Only when the time dependent part of the Transport Block ID is set to 0 again (so slot number = subframe number = SFN = HSFN = SSFN = 0), both transmitter and receiver start using the new key.

In an embodiment the cryptographic processing may use a truncated encryption. For example, AES can be computed relatively fast in software and a very fast implementation is described in [EKPS]. Many Intel processors support AES-NI instructions that can do a single AES ECB encryption in one cycle. Similar AES accelerators are supported for AMD processors, ARM processors, while most processors for use in mobile phones, e.g. snapdragon processors also support AES hardware accelerators.

Alternatively, the security may be less critical and a less strong cipher than AES may be used, e.g. one that can be computed faster than AES. So, the encryption operation may be done on top of the CRC operation, while CRC operations are usually done in time critical parts of a system that do not have the resources for many computations. Some faster, somewhat less secure, ciphers than AES are Blowfish [BF], Mini-AES [MAES] and Prince-128 [Prince].

In an embodiment the cryptographic processing is a truncated keyed hash function like HMAC-SHA256. If the BlockID is less than 512 - 64 = 458 bit, HMAC-SHA256 requires four of the SHA256 basic block operations, where each basic block operation requires 64 rounds of rotating and exoring 32 bit numbers. In contrast AES is performed on one block of 128 bit input data in 10 rounds, where in most rounds, 16 lookup table operations, i.e. one LUT operation on each of the 16 bytes of the block, a rotation, a mixing of columns and an addition. The number of operations on a 32-bit CPU is therefore about the same for SHA256 and AES, but SHA256 has to be applied 4 times in HMAC-SHA256, so perhaps AES ECB encryption or decryption may be faster than HMAC-SHA256 on most processors.

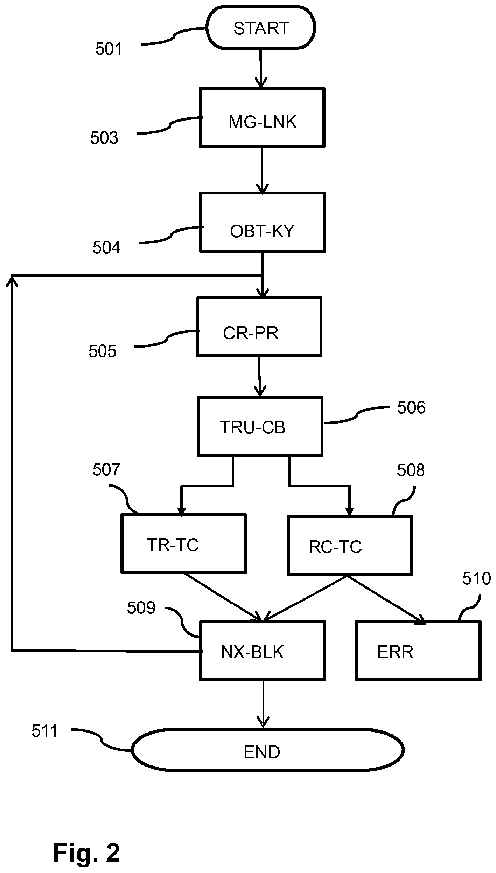

Fig. 2 shows an integrity method for use in a user device arranged for wireless communication via a base station in a cellular network as described above. The user device and base station have been described above. The method may be executed, for example, by circuitry and software in a processor in a stationary or mobile user device. It is noted that Fig. 2 shows a method for a user device, which may be cooperating with an integrity device in the base station as described above.

In the method, a link between the user device and the base station is assumed to have been set up. The method starts at node START 501. In a first stage MG-LNK 503 data transfer on the link to the base station is managed using link data regarding a sequence of the data blocks across the link. The link data is different for each data block in the sequence, as described in the embodiments above regarding BlockID. In a next stage OBT-KY 504 a secret integrity key is obtained that is shared with the base station. In the subsequent stages, which are repeated for respective data blocks, data integrity of the data blocks is provided.

In stage CR-PR 505, while using the secret integrity key, a combination of the checksum for a predetermined one of the checksum fields and a predetermined part of the link data are cryptographically processed. In a next stage TRU-CB 506, the cryptographically processed combination is truncated to the length of the checksum as defined by the communication protocol. In a next stage TR-TC 507, before transmitting a data block, the truncated combination for error detection and integrity protection is used by inserting the truncated combination in the predetermined one of the checksum fields.

In an alternative stage RC-TC 508, upon receiving a data block, a received value in the predetermined one of the checksum fields is compared with the truncated combination. If both values are not equal, an integrity error is generated in stage ERR 510. The error may be caused by manipulation of the data or transmission errors during wireless communication. If said values are equal, the method continues at stage NX-BLK 509.

In stage NX-BLK 509 it is determined whether a next data block needs to be processed, and if so, the method continues, for the next data block, at stage CR-PR 505. If no further data is transferred via the link, the method terminates in node END 511.

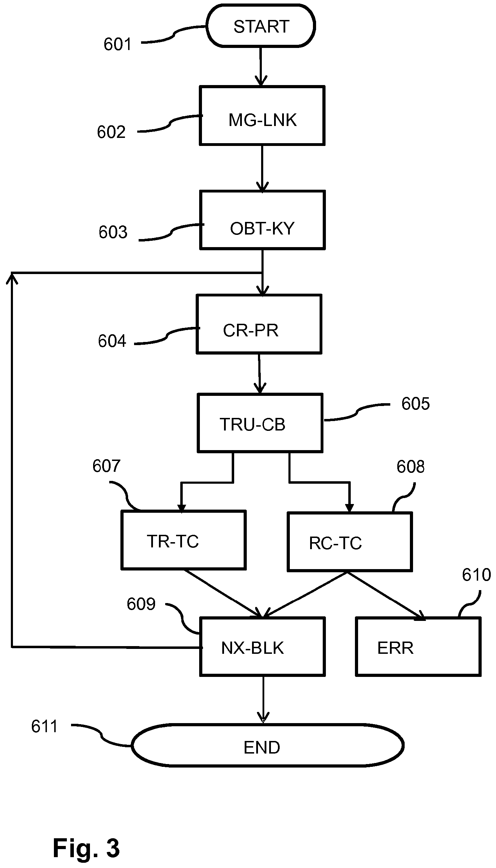

Fig. 3 shows an integrity method for use in a base station arranged for wireless communication to a user device in a cellular network as described above. The user device and base station have been described above. The method may be executed, for example, by circuitry and software in a processor in a computing unit in the base station. It is noted that Fig. 3 shows a method for a base station, which may be cooperating with a user device as described above. The method starts at node START 601.

In the integrity method, a link between the user device and the base station is assumed to have been set up. In a first stage MG-LNK 602 data transfer on the link to the user device is managed using link data regarding a sequence of the data blocks across the link. The link data is different for each data block in the sequence, as described in the embodiments above regarding BlockID. It is noted that this process may alternatively be part of a further method in the base station, while the integrity method then starts at stage OBT-KY.

In a stage OBT-KY 603 a secret integrity key is obtained that is shared with the user device. In the subsequent stages, which are repeated for respective data blocks, data integrity of the data blocks is provided.

In stage CR-PR 604, while using the secret integrity key, a combination of the checksum for a predetermined one of the checksum fields and a predetermined part of the link data are cryptographically processed. In a next stage TRU-CB 605, the cryptographically processed combination is truncated to the length of the checksum as defined by the communication protocol. In a next stage TR-TC 607, before transmitting a data block, the truncated combination for error detection and integrity protection is used by inserting the truncated combination in the predetermined one of the checksum fields.

In an alternative stage RC-TC 608, upon receiving a data block, a received value in the predetermined one of the checksum fields is compared with the truncated combination. If both values are not equal, an integrity error is generated in stage ERR 610. The error may be caused by manipulation of the data or transmission errors during wireless communication. If said values are equal, the method continues at stage NX-BLK 609.

In stage NX-BLK 609 it is determined whether a next data block needs to be processed, and if so, the method continues, for the next data block, at stage CR-PR 604. If no further data is transferred via the link, the method terminates in node END 611.

Many different ways of implementing the methods are possible, as will be apparent to a person skilled in the art. For example, the order of the stages or steps can be varied or some stages may be executed in parallel. Moreover, in between steps other method steps may be inserted. The inserted steps may represent refinements of the method such as described herein or may be unrelated to the method.

Computer program products, downloadable from a network and/or stored on a computer-readable medium and/or microprocessor-executable medium, are provided that comprise program code instructions for implementing the above method, connection sequence, security process and further operations when executed on a computer device. So, the method according to the invention may be executed using software, which comprises instructions for causing a processor system to perform the respective method.

Typically, the user device and the integrity device in the base station that interact to execute the integrity protection, each comprise a processor coupled to a memory containing appropriate software code stored at the devices; for example, that software may have been downloaded and/or stored in a corresponding memory, e.g., a volatile memory such as RAM or a non-volatile memory such as Flash (not shown). The devices may for example be equipped with microprocessors and memories (not shown). Alternatively, the devices may, in whole or in part, be implemented in programmable logic, e.g., as field-programmable gate array (FPGA). The devices and server may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bit stream arranged to configure programmable logic, e.g., a field-programmable gate array (FPGA), to perform the method. It will be appreciated that the software may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

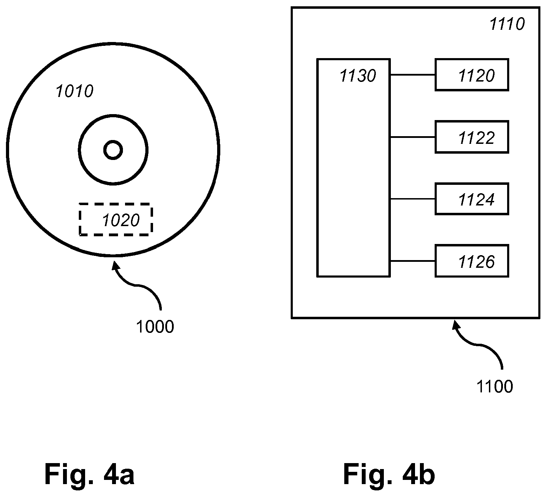

Fig. 4a shows a computer readable medium 1000 having a writable part 1010 comprising a computer program 1020, the computer program 1020 comprising instructions for causing a processor system to perform one or more of the above methods and processes in the system as described with reference to Figs. 1-3. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said methods.

Fig. 4b shows in a schematic representation of a processor system 1100 according to an embodiment of the devices or methods as described with reference to Figs. 1-3. The processor system may comprise a circuit 1110, for example one or more integrated circuits. The architecture of the circuit 1110 is schematically shown in the Figure. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, a transceiver, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for wired and/or wireless communication, using connectors and/or antennas, respectively.

It will be appreciated that, for clarity, the above description describes embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention can be implemented in any suitable form including hardware, software, firmware or any combination of these.

It is noted that in this document the verb 'comprise' does not exclude the presence of elements or steps other than those listed and the word 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. Any reference signs do not limit the scope of the claims. The invention may be implemented by means of both hardware and software. Several 'means' or 'units' may be represented by the same item of hardware or software, and a processor may fulfill the function of one or more units, possibly in cooperation with hardware elements. Further, the invention is not limited to the embodiments, and the invention lies in each and every novel feature or combination of features described above or recited in mutually different dependent claims.

In summary, a user device is arranged for wireless communication in a cellular network via a base station. The device has a transceiver and a processor arranged to manage data transfer on a link using link data and to obtain a secret integrity key that is shared with the base station, and an integrity unit for providing data integrity of the data blocks. The integrity unit cryptographically processes, while using the secret integrity key, a combination of the checksum for a predetermined one of the checksum fields and a predetermined part of the link data, then truncates the cryptographically processed combination, and uses the truncated combination for error detection and integrity protection by inserting the truncated combination in the predetermined one of the checksum fields before transmitting and by comparing a value in the predetermined one of the checksum fields with the truncated combination after reception.

Reference documents:

**EP 3 644 637 B1**

[36211-R15]  3rd Generation Partnership Project; Technical Specification Group Radio Access Network; Evolved Universal Terrestrial Radio Access (E-UTRA); Physical channels and modulation (Release 15); 3GPP TS 36.211 V15.2.0 (2018-06); http://www.3gpp.org/ftp//Specs/archive/36_series/36.211/36211-f20.zip

[36212-R15]  3rd Generation Partnership Project; Technical Specification Group Radio Access Network; Evolved Universal Terrestrial Radio Access (E-UTRA); Multiplexing and channel coding (Release 15); 3GPP TS 36.212 V15.2.1 (2018-07); http://www.3gpp.org/ftp//Specs/archive/36_series/36.212/36212-121.zip

[36213-R15]  3rd Generation Partnership Project; Technical Specification Group Radio Access Network; Evolved Universal Terrestrial Radio Access (E-UTRA); Physical layer procedures (Release 15); 3GPP TS 36.213 V15.2.0 (2018-06); http://www.3gpp.org/ftp//Specs/archive/36_series/36.213/36213-f20.zip

[AES]  FIPS Publication 197, "Advanced Encryption Standard (AES)." U.S. DoC/NIST, November 26, 2001.

[BF]  "Blowfish", Sankeeth Kumar Chinta, # 991730264, Sept 18, 2015; http://cs.indstate.edu/~schinta/blowfish.pdf

[EKPS]  Emilia Kasper and Peter Schwabe, "Faster and Timing-Attack Resistant AES-GCM", Cryptology ePrint Archive: Report 2009/129, version 20090616:130911; https://eprint.iacr.org/2009/129.pdf

[MAES]  Phan, R. C.-W., "Mini Advanced Encryption Standard (Mini-AES): A Testbed for Cryptanalysis Students", Cryptologia, 26(4), 2002.

[MODES]  Dworkin, M., "Recommendation for Block Cipher Modes of Operation: Methods and Techniques", NIST Special Publication 800-38A, 2001 edition.

[Prince]  Julia Borgho et al, "PRINCE, A Low-latency Block Cipher for Pervasive Computing Applications", Cryptology ePrint Archive: Report 2012/529, Version: 20140612:115014; http://eprint.iacr.org/2012/529.pdf

[RFC 2104]  "HMAC: Keyed-Hashing for Message Authentication", February 1997, https://datatracker.ietf.org/doc/rfc2104/

[XTEA]  "Tea extensions", Roger M. Needham and David J. Wheeler, Notes October 1996, Revised March 1997, Corrected October 1997; http://www.cix.co.uk/~klockstone/xtea.pdf

**Claims**

1.  User device arranged for wireless communication (130) in a cellular network, the cellular network providing the wireless communication to the user device via a base station (110) according to a communication protocol,

the communication protocol defining

- data blocks on a link between the base station and the user device, the data blocks comprising user data and checksum fields, and
- checksums for error detection in the user data in the data blocks,

the device (120) comprising
a transceiver (121) arranged for transceiving according to the communication protocol;
a processor (122) arranged

- to manage data transfer on the link to the base station using link data regarding a sequence of the data blocks across the link, the link data being different for each data block in the sequence, and
- to obtain a secret integrity key that is shared with the base station; and

an integrity unit (124) for providing data integrity of the data blocks,
**characterized in that** the integrity unit is arranged, for a respective data block,

- to cryptographically process, using the secret integrity key, a combination of the checksum for a predetermined one of the checksum fields and a predetermined part of the link data,
- to truncate the cryptographically processed combination to the length of the checksum as defined by the communication protocol, and

- to use the truncated combination for error detection and integrity protection by inserting the truncated combination in the predetermined one of the checksum fields before transmitting the data block and by comparing a value in the predetermined one of the checksum fields with the truncated combination after receiving the data block.

2. Device as claimed in claim 1, wherein the predetermined part of the link data comprises a block identity (BlockID) that is modified for subsequent data blocks in the sequence.

3. Device as claimed in claim 2, wherein the block identity comprises a frame number that is indicative of a frame in which the block starts when transferred via the link.

4. Device as claimed in claim 2, wherein the block identity comprises one or more of the following components

   - a subframe number indicative of a subframe in which the block starts, the subframe number counting subframes in a frame,
   - a system frame number (SFN) indicative of a frame in which the block starts, the system frame number counting frames in a system frame sequence as transferred via the link,
   - hyper system frame number (HSFN) indicative of the system frame sequence in which the block starts, the hyper system frame number counting the system frame sequences as transferred via the link.

5. Device as claimed in any of the preceding claims, wherein

   the communication protocol further defines an integrity frame number (SSFN), the integrity frame number sequentially counting frames or sequences of frames as transferred, and
   the predetermined part of the link data comprises the integrity frame number indicative of a frame in which the block starts.

6. Device as claimed in any of the preceding claims, wherein the processor (122) is arranged to periodically obtain a new secret integrity key that is shared with the base station to renew the secret integrity key after a validity period, which validity period is less than or equal to a period over which time-related components of the predetermined part of the link data repeat.

7. Device as claimed in any of the preceding claims, wherein the predetermined part of the link data further comprises varying link data comprising at least one of:

   - a slot number indicative of a transmission slot in which the block starts,
   - the length of the block,
   - a control value indicative of a block type of the block to which the checksum relates,
   - a control value indicating whether the block is the first or second block to or from a device in a current subframe,
   - a control value indicating whether the data block is sent uplink or downlink.

8. Device as claimed in any of the preceding claims, wherein the predetermined part of the link data further comprises transmission related link data comprising at least one of:

   - a control value indicative of a number of a spatial stream or an antenna port number of spatial multiplexing used for transferring the block,
   - a carrier indicator indicating a carrier on which the block is transferred on using carrier aggregation,
   - a control value indicating a lowest or highest frequency of subcarriers used for the data block,
   - a control value indicating a number of subcarriers used for the data block,
   - a control value indicating a number of resource blocks used for the data block,
   - a network identity (PLMN ID) or cell identity (CellIdentity) of a current cell within the cellular network accommodating the link,
   - an evolved cell global identifier representing a combination of a network identity and a cell identity of the cellular network accommodating the link,
   - a physical layer cell identity of the cellular network accommodating the link,
   - a base station name of the base station accommodating the link.

9. Device as claimed in any of the preceding claims, wherein

the communication protocol further defines

- multiple different block types of data blocks comprising transport blocks (TB) and code blocks (CB), and
- multiple different types of checksums corresponding to the multiple different types of data blocks,

and wherein the predetermined part of the link data comprises different block numbers for subsequent data blocks of the respective types in the sequence.

10. Device as claimed in any of the preceding claims, wherein the processor (122) is arranged

- to obtain an integrity indicator that is shared with the base station, which integrity indicator indicates whether the checksum fields comprise the checksum or the truncated combination;

and

the integrity unit is arranged, for a respective data block, to apply the integrity protection in accordance with the integrity indicator by
inserting the checksum in the predetermined one of the checksum fields before transmitting the data block and comparing a value in the predetermined one of the checksum fields with the checksum after receiving the data block, or
inserting the truncated combination in the predetermined one of the checksum fields before transmitting the data block and comparing a value in the predetermined one of the checksum fields with the truncated combination after receiving a data block.

11. Device as claimed in claim 10, wherein the integrity indicator indicates whether to apply the integrity protection in one or more of the following cases:

- uplink traffic towards the base station;
- downlink traffic from the base station;
- separate for each user device in communication with the base station;
- separate for different types of data blocks; and

the integrity unit is arranged, for a respective data block, to apply the integrity protection in accordance with the integrity indicator.

12. Integrity device for use in a base station (110) arranged for wireless communication (130) in a cellular network,

the cellular network providing the wireless communication to a user device (120) via the base station according to a communication protocol,
the communication protocol defining

- data blocks on a link between the base station and the user device, the data blocks comprising user data and checksum fields,
- checksums for error detection in the user data in the data blocks,
- link data regarding a sequence of the data blocks across the link, the link data being different for each data block in the sequence, and

the integrity device (113) comprising
a processor (112) arranged to obtain a secret integrity key that is shared with the user device; and
an integrity unit (114) for providing data integrity of the data blocks,
**characterized in that** the integrity unit is arranged, for a respective data block,

- to cryptographically process, using the secret integrity key, a combination of the checksum for a predetermined one of the checksum fields and a predetermined part of the link data,
- to truncate the cryptographically processed combination to the length of the checksum as defined by the communication protocol, and

- to use the truncated combination for error detection and integrity protection by inserting the truncated combination in the predetermined one of the checksum fields before transmitting the data block and by comparing a value in the predetermined one of the checksum fields with the truncated combination after receiving the data block.

13. Method for use in a user device arranged for wireless communication (130) in a cellular network,

the cellular network providing the wireless communication to the user device via a base station (110) according to a communication protocol,
the communication protocol defining

- data blocks on a link between the base station and the user device, the data blocks comprising user data and checksum fields,
- checksums for error detection in the user data in the data blocks, and
- link data regarding a sequence of the data blocks across the link, the link data being different for each data block in the sequence,

the method comprising obtaining a secret integrity key that is shared with the base station, and providing data integrity of the data blocks, by, for a respective data block,
**characterized by**

- cryptographically processing, using the secret integrity key, a combination of the checksum for a predetermined one of the checksum fields and a predetermined part of the link data,
- truncating the cryptographically processed combination to the length of the checksum as defined by the communication protocol, and
- using the truncated combination for error detection and integrity protection by inserting the truncated combination in the predetermined one of the checksum fields before transmitting the data block and by comparing a value in the predetermined one of the checksum fields with the truncated combination after receiving the data block.

14. Method for use in a base station arranged for wireless communication (130) in a cellular network,

the cellular network providing the wireless communication to a user device (120) via the base station according to a communication protocol,
the communication protocol defining

- data blocks on a link between the base station and the user device, the data blocks comprising user data and checksum fields,
- checksums for error detection in the user data in the data blocks, and
- link data regarding a sequence of the data blocks across the link, the link data being different for each data block in the sequence,

the method comprising obtaining a secret integrity key that is shared with the user device; and providing data integrity of the data blocks, by, for a respective data block,
**characterized by**

- cryptographically processing, using the secret integrity key, a combination of the checksum for a predetermined one of the checksum fields and a predetermined part of the link data,
- truncating the cryptographically processed combination to the length of the checksum as defined by the communication protocol, and
- using the truncated combination for error detection and integrity protection by inserting the truncated combination in the predetermined one of the checksum fields before transmitting the data block and by comparing a value in the predetermined one of the checksum fields with the truncated combination after receiving the data block.

15. Computer program product downloadable from a network and/or stored on a computer-readable medium and/or microprocessor-executable medium, the product comprising program code instructions for implementing a method according to claims 13 or 14 when executed on a computing device.

**EP 3 644 637 B1**

**Patentansprüche**

1. Benutzervorrichtung, das zur drahtlosen Kommunikation (130) in einem Mobilfunknetz angeordnet ist, wobei das Mobilfunknetz der Benutzervorrichtung die drahtlose Kommunikation über eine Basisstation (110) gemäß einem Kommunikationsprotokoll bereitstellt,

   wobei das Kommunikationsprotokoll definiert

      - Datenblöcke auf einem Link zwischen der Basisstation und der Benutzervorrichtung, wobei die Datenblöcke Benutzerdaten und Prüfsummenfelder umfassen, und
      - Prüfsummen zur Fehlererkennung in den Benutzerdaten in den Datenblöcken,

   wobei die Vorrichtung (120), umfasst

      einen Sende-Empfänger (121), der gemäß dem Kommunikationsprotokoll zum Senden/Empfangen angeordnet ist;
      einen Prozessor, der angeordnet ist,

         - um Datenübertragung über den Link zur Basisstation unter Verwendung von Linkdaten bezüglich einer Sequenz der Datenblöcke über den Link zu verwalten, wobei die Linkdaten für jeden Datenblock in der Sequenz unterschiedlich sind, und
         - um einen geheimen Integritätsschlüssel zu erhalten, der mit der Basisstation geteilt wird; und

      eine Integritätseinheit (124) zum Bereitstellen von Datenintegrität der Datenblöcke,
      **dadurch gekennzeichnet dadurch, dass** die Integritätseinheit für einen jeweiligen Datenblock angeordnet ist,

         - um unter Verwendung des geheimen Integritätsschlüssels eine Kombination aus der Prüfsumme für ein vorbestimmtes der Prüfsummenfelder und einem vorbestimmten Teil der Linkdaten kryptografisch zu verarbeiten,
         - um die kryptografisch verarbeitete Kombination auf die Länge der Prüfsumme, wie durch das Kommunikationsprotokoll definiert, zu kürzen, und
         - um die gekürzte Kombination zur Fehlererkennung und Integritätssicherung durch Einfügen der gekürzten Kombination vor dem Senden des Datenblocks in das vorbestimmte der Prüfsummenfelder und Vergleichen eines Wertes in dem vorbestimmten der Prüfsummenfelder mit der gekürzten Kombination nach dem Empfang des Datenblocks zu verwenden.

2. Vorrichtung nach Anspruch 1, wobei der vorbestimmte Teil der Linkdaten eine Blockidentität (BlockID) umfasst, die für nachfolgende Datenblöcke in der Sequenz geändert wird.

3. Vorrichtung nach Anspruch 2, wobei
die Blockidentität eine Frame-Nummer umfasst, die auf einen Frame hinweist, in dem der Block bei der Übertragung über den Link beginnt.

4. Vorrichtung nach Anspruch 2, wobei die Blockidentität eine oder mehrere der folgenden Komponenten umfasst

   - eine Subframe-Nummer, die auf einen Subframe hinweist, in dem der Block beginnt, wobei die Subframe-Nummer Subframes in einem Frame zählt,
   - eine System-Frame-Nummer (SFN), die auf einen Frame hinweist, in dem der Block beginnt, wobei die System-Frame-Nummer Frames in einer System-Frame-Sequenz zählt, wie sie über den Link übertragen werden,
   - eine Hyper-System-Frame-Nummer (HSFN), die auf die System-Frame-Sequenz hinweist, in welcher der Block beginnt, wobei die Hyper-System-Frame-Nummer die System-Frame-Sequenzen zählt, wie sie über den Link übertragen werden.

5. Vorrichtung nach einem der vorstehenden Ansprüche, wobei

   das Kommunikationsprotokoll weiter eine Integritätsframe-Nummer (SSFN) definiert, wobei de Integritätsframe-Nummer sequenziell Frames oder Frame-Sequenzen zählt, wie sie übertragen werden, und

der vorbestimmte Teil der Linkdaten die Integritätsframe-Nummer umfasst, die auf einen Frame hinweist, in dem der Block beginnt.

6. Vorrichtung nach einem der vorstehenden Ansprüche, wobei

der Prozessor (122) angeordnet ist, um periodisch einen neuen geheimen Integritätsschlüssel zu erhalten, der mit der Basisstation geteilt wird, um den geheimen Integritätsschlüssel nach einer Gültigkeitsdauer zu erneuern, wobei
die Gültigkeitsdauer kleiner oder gleich einem Zeitraum ist, in dem sich zeitbezogene Komponenten des vorbestimmten Teils der Linkdaten wiederholen.

7. Vorrichtung nach einem der vorstehenden Ansprüche, wobei
der vorbestimmte Teil der Linkdaten weiter sich ändernde Linkdaten umfasst, die mindestens eines umfassen von:

- einer Slotnummer, die auf einen Übertragungsslot hinweist, in dem der Block beginnt,
- der Länge des Blocks,
- einem Steuerungswert, der auf den Blocktyp des Blocks hinweist, auf den sich die Prüfsumme bezieht,
- einem Steuerungswert, der darauf hinweist, ob der Block der erste oder zweite Block zu oder von einer Vorrichtung in einem aktuellen Subframe ist,
- einem Steuerungswert, der darauf hinweist, ob der Datenblock Uplink oder Downlink gesendet wird.

8. Vorrichtung nach einem der vorstehenden Ansprüche, wobei
der vorbestimmte Teil der Linkdaten weiter übertragungsbezogene Linkdaten umfasst, die mindestens eines umfassen von:

- einem Steuerungswert, der auf die Nummer eines räumlichen Datenstroms oder eine Antennenanschlussnummer eines zur Übertragung des Blocks verwendeten räumlichen Multiplexings hinweist,
- einem Trägerindikator, der auf einen Träger hinweist, auf dem der Block unter Verwendung von Trägeraggregation übertragen wird,
- einem Steuerungswert, der auf eine niedrigste oder höchste Frequenz der für den Datenblock verwendeten Subträger hinweist,
- einem Steuerungswert, der auf eine Anzahl an für den Datenblock verwendeten Subträger hinweist,
- einem Steuerungswert, der auf eine Anzahl an für den Datenblock verwendeten Ressourcenblöcke hinweist,
- einer Netzwerkidentität (PLMN-ID) oder Zellenidentität (CellIdentity) einer aktuellen Zelle innerhalb des Mobilfunknetzes, das den Link aufnimmt,
- einer entwickelten globalen Zellenkennung, die eine Kombination aus Netzwerkidentität und Zellenidentität des Mobilfunknetzes darstellt, das den Link aufnimmt,
- einer Zellidentität einer physikalischen Schicht des Mobilfunknetzes, das den Link aufnimmt,
- einem Basisstationsnamen der Basisstation, die den Link aufnimmt.

9. Vorrichtung nach einem der vorstehenden Ansprüche, wobei

das Kommunikationsprotokoll weiter definiert

- mehrere verschiedene Blocktypen von Datenblöcken, die Transportblöcke (TB) und Codeblöcke (CB) umfassen, und
- mehrere verschiedene Arten von Prüfsummen, die den mehreren verschiedenen Arten von Datenblöcken entsprechen,

und wobei der vorbestimmte Teil der Linkdaten unterschiedliche Blocknummern für nachfolgende Datenblöcke der jeweiligen Arten in der Sequenz umfasst.

10. Vorrichtung nach einem der vorstehenden Ansprüche, wobei der Prozessor (122) angeordnet ist

- um einen Integritätsindikator zu erhalten, der mit der Basisstation geteilt wird, wobei der Integritätsindikator darauf hinweist, ob die Prüfsummenfelder die Prüfsumme oder die gekürzte Kombination enthalten; und
die Integritätseinheit angeordnet ist, um für einen jeweiligen Datenblock den Integritätsschutz gemäß dem Integritätsindikator anzuwenden, durch

Einfügen der Prüfsumme in das vorbestimmte der Prüfsummenfelder vor dem Übertragen des Datenblocks und Vergleichen eines Werts in einem vorbestimmten der Prüfsummenfelder mit der Prüfsumme nach Empfangen des Datenblocks, oder

Einfügen der gekürzten Kombination vor dem Senden des Datenblocks in das vorbestimmte der Prüfsummenfelder und Vergleichen eines Wertes in dem vorbestimmten der Prüfsummenfelder mit der gekürzten Kombination nach dem Empfang eines Datenblocks zu verwenden.

11. Vorrichtung nach Anspruch 10, wobei der Integritätsindikator darauf hinweist, ob der Integritätsschutz in einem oder mehreren der folgenden Fälle anzuwenden ist:

- Uplink-Verkehr in Richtung der Basisstation;
- Downlink-Verkehr von der Basisstation;
- getrennt für jede Benutzervorrichtung in Kommunikation mit der Basisstation;
- getrennt für verschiedene Arten von Datenblöcken; und

die Integritätseinheit angeordnet ist, um für einen jeweiligen Datenblock den Integritätsschutz gemäß dem Integritätsindikator anzuwenden.

12. Integritätsvorrichtung zur Verwendung in einer Basisstation (110), die zur drahtlosen Kommunikation (130) in einem Mobilfunknetz angeordnet ist,

wobei das Mobilfunknetz die drahtlose Kommunikation einer Benutzervorrichtung (120) über eine Basisstation gemäß einem Kommunikationsprotokoll bereitstellt,
wobei das Kommunikationsprotokoll definiert

- Datenblöcke auf einem Link zwischen der Basisstation und der Benutzervorrichtung, wobei die Datenblöcke Benutzerdaten und Prüfsummenfelder umfassen,
- Prüfsummen zur Fehlererkennung in den Benutzerdaten in den Datenblöcken,
- Linkdaten bezüglich einer Sequenz der Datenblöcke über den Link, wobei die Linkdaten für jeden Datenblock in der Sequenz unterschiedlich sind, und

wobei die Integritätsvorrichtung (113) umfasst

einen Prozessor (112), der angeordnet ist, um einen geheimen Integritätsschlüssel zu erhalten, der mit der Benutzervorrichtung geteilt wird; und
eine Integritätseinheit (114) zum Bereitstellen von Datenintegrität der Datenblöcke,

**dadurch gekennzeichnet dadurch, dass** die Integritätseinheit für einen jeweiligen Datenblock angeordnet ist,

- um unter Verwendung des geheimen Integritätsschlüssels eine Kombination aus der Prüfsumme für ein vorbestimmtes der Prüfsummenfelder und einem vorbestimmten Teil der Linkdaten kryptografisch zu verarbeiten,
- um die kryptografisch verarbeitete Kombination auf die Länge der Prüfsumme, wie durch das Kommunikationsprotokoll definiert, zu kürzen, und
- um die gekürzte Kombination zur Fehlererkennung und Integritätssicherung durch Einfügen der gekürzten Kombination vor dem Senden des Datenblocks in das vorbestimmte der Prüfsummenfelder und Vergleichen eines Wertes in dem vorbestimmten der Prüfsummenfelder mit der gekürzten Kombination nach dem Empfang des Datenblocks zu verwenden.

13. Verfahren zur Verwendung in einer Benutzervorrichtung, die zur drahtlosen Kommunikation (130) in einem Mobilfunknetz angeordnet ist,

wobei das Mobilfunknetz die drahtlose Kommunikation der Benutzervorrichtung über eine Basisstation (110) gemäß einem Kommunikationsprotokoll bereitstellt,
wobei das Kommunikationsprotokoll definiert

- Datenblöcke auf einem Link zwischen der Basisstation und der Benutzervorrichtung, wobei die Datenblöcke Benutzerdaten und Prüfsummenfelder umfassen,

- Prüfsummen zur Fehlererkennung in den Benutzerdaten in den Datenblöcken, und
- Linkdaten bezüglich einer Sequenz der Datenblöcke über den Link, wobei die Linkdaten für jeden Datenblock in der Sequenz unterschiedlich sind,

wobei das Verfahren Erhalten eines geheimen Integritätsschlüssels umfasst, der mit der Basisstation geteilt wird, und Bereitstellen der Datenintegrität der Datenblöcke durch, für einen jeweiligen Datenblock, **gekennzeichnet durch**

- kryptografisch Verarbeiten unter Verwendung des geheimen Integritätsschlüssels einer Kombination aus der Prüfsumme für ein vorbestimmtes der Prüfsummenfelder und einem vorbestimmten Teil der Linkdaten,
- Kürzen der kryptografisch verarbeitete Kombination auf die Länge der Prüfsumme, wie durch das Kommunikationsprotokoll definiert, und
- Verwenden der gekürzten Kombination zur Fehlererkennung und Integritätssicherung durch Einfügen der gekürzten Kombination vor dem Senden des Datenblocks in das vorbestimmte der Prüfsummenfelder und Vergleichen eines Wertes in einem vorbestimmten der Prüfsummenfelder mit der gekürzten Kombination nach dem Empfang des Datenblocks.

**14.** Verfahren zur Verwendung in einer Basisstation, die zur drahtlosen Kommunikation (130) in einem Mobilfunknetz angeordnet ist,

wobei das Mobilfunknetz die drahtlose Kommunikation einer Benutzervorrichtung (120) über eine Basisstation gemäß einem Kommunikationsprotokoll bereitstellt,
wobei das Kommunikationsprotokoll definiert

- Datenblöcke auf einem Link zwischen der Basisstation und der Benutzervorrichtung, wobei die Datenblöcke Benutzerdaten und Prüfsummenfelder umfassen,
- Prüfsummen zur Fehlererkennung in den Benutzerdaten in den Datenblöcken, und
- Linkdaten bezüglich einer Sequenz der Datenblöcke über den Link, wobei die Linkdaten für jeden Datenblock in der Sequenz unterschiedlich sind,

wobei das Verfahren Erhalten eines geheimen Integritätsschlüssels umfasst, der mit der Benutzervorrichtung geteilt wird, und Bereitstellen der Datenintegrität der Datenblöcke durch, für einen jeweiligen Datenblock, **gekennzeichnet durch**

- kryptografisch Verarbeiten unter Verwendung des geheimen Integritätsschlüssels einer Kombination aus der Prüfsumme für ein vorbestimmtes der Prüfsummenfelder und einem vorbestimmten Teil der Linkdaten,
- Kürzen der kryptografisch verarbeitete Kombination auf die Länge der Prüfsumme, wie durch das Kommunikationsprotokoll definiert, und
- Verwenden der gekürzten Kombination zur Fehlererkennung und Integritätssicherung durch Einfügen der gekürzten Kombination vor dem Senden des Datenblocks in das vorbestimmte der Prüfsummenfelder und Vergleichen eines Wertes in einem vorbestimmten der Prüfsummenfelder mit der gekürzten Kombination nach dem Empfang des Datenblocks.

**15.** Computerprogrammprodukt, das von einem Netzwerk herunterladbar ist und/oder auf einem computerlesbaren Medium und/oder einem mikroprozessorausführbaren Medium gespeichert ist, das Produkt umfassend Programmcodeanweisungen zum Implementieren eines Verfahrens nach den Ansprüchen 13 oder 14, wenn sie auf einer Rechenvorrichtung ausgeführt werden.

**Revendications**

**1.** Dispositif utilisateur configuré pour la communication sans fil (130) dans un réseau cellulaire, le réseau cellulaire fournissant la communication sans fil au dispositif utilisateur via une station de base (110) selon un protocole de communication,

le protocole de communication définissant

- des blocs de données sur une liaison entre la station de base et le dispositif utilisateur, les blocs de données comprenant des données utilisateur et des champs de somme de contrôle, et
- des sommes de contrôle pour la détection d'erreurs dans les données utilisateur des blocs de données,

le dispositif (120), comprenant

un émetteur-récepteur (121) conçu pour transmettre et recevoir selon le protocole de communication ;
un processeur (122) agencé

- pour gérer le transfert de données sur la liaison vers la station de base en utilisant des données de liaison concernant une séquence de blocs de données à travers la liaison, les données de liaison étant différentes pour chaque bloc de données de la séquence, et
- pour obtenir une clé d'intégrité secrète partagée avec la station de base ; et

une unité d'intégrité (124) pour assurer l'intégrité des données des blocs de données,
**caractérisé en ce que** l'unité d'intégrité est agencée, pour un bloc de données respectif,

- pour traiter cryptographiquement, à l'aide de la clé d'intégrité secrète, une combinaison de la somme de contrôle d'un des champs de somme de contrôle prédéterminé et d'une partie prédéterminée des données de liaison,
- pour tronquer la combinaison traitée cryptographiquement à la longueur de la somme de contrôle telle que définie par le protocole de communication, et
- pour utiliser la combinaison tronquée pour la détection d'erreurs et la protection de l'intégrité en insérant la combinaison tronquée dans l'un des champs de somme de contrôle prédéterminé avant de transmettre le bloc de données et en comparant une valeur dans l'un des champs de somme de contrôle prédéterminé avec la combinaison tronquée après réception du bloc de données.

2. Dispositif selon la revendication 1, dans lequel la partie prédéterminée des données de liaison comprend une identité de bloc (BlockID) qui est modifiée pour les blocs de données suivants dans la séquence.

3. Dispositif selon la revendication 2, dans lequel
l'identité de bloc comprend un numéro de trame qui indique la trame dans laquelle le bloc commence lors de son transfert via la liaison.

4. Dispositif selon la revendication 2, dans lequel l'identité du bloc comprend un ou plusieurs des composants suivants

- un numéro de sous-trame indiquant la sous-trame dans laquelle le bloc commence, le numéro de sous-trame comptant les sous-trames dans une trame,
- un numéro de trame système (SFN) indiquant une trame dans laquelle le bloc commence, le numéro de trame système comptant les trames dans une séquence de trames système telles que transférées via la liaison,
- un numéro de trame hyper système (HSFN) indiquant la séquence de trame système dans laquelle le bloc commence, le numéro de trame hyper système comptant les séquences de trame système telles que transférées via la liaison.

5. Dispositif selon l'une quelconque des revendications précédentes, dans lequel

le protocole de communication définit en outre un numéro de trame d'intégrité (SSFN), le numéro de trame d'intégrité comptant séquentiellement des trames ou séquences de trames transférées, et
la partie prédéterminée des données de liaison comprend le numéro de trame d'intégrité indiquant une trame dans laquelle le bloc commence.

6. Dispositif selon l'une quelconque des revendications précédentes, dans lequel

le processeur (122) est configuré pour obtenir périodiquement une nouvelle clé d'intégrité secrète qui est partagée avec la station de base afin de renouveler la clé d'intégrité secrète après une période de validité, ladite période de validité étant inférieure ou égale à une période sur laquelle se répètent les composantes temporelles de la partie prédéterminée des données de liaison.

7. Dispositif selon l'une quelconque des revendications précédentes, dans lequel

la partie prédéterminée des données de liaison comprend en outre des données de liaison variables comprenant au moins un des éléments suivants :

- un numéro de créneau indiquant un créneau de transmission dans lequel le bloc commence,
- la longueur du bloc,
- une valeur de contrôle indiquant le type de bloc du bloc auquel la somme de contrôle se rapporte,
- une valeur de contrôle indiquant si le bloc est le premier ou le deuxième bloc vers ou depuis un dispositif dans une sous-trame actuelle,
- une valeur de contrôle indiquant si le bloc de données est envoyé en liaison montante ou descendante.

8. Dispositif selon l'une quelconque des revendications précédentes, dans lequel la partie prédéterminée des données de liaison comprend en outre des données de liaison relatives à la transmission comprenant au moins un des éléments suivants :

- une valeur de contrôle indiquant un numéro de flux spatial ou un numéro de port d'antenne de multiplexage spatial utilisé pour le transfert du bloc,
- un indicateur de porteuse indiquant la porteuse sur laquelle le bloc est transféré en utilisant l'agrégation de porteuses,
- une valeur de contrôle indiquant une fréquence minimale ou maximale des sous-porteuses utilisées pour le bloc de données,
- une valeur de contrôle indiquant le nombre de sous-porteuses utilisées pour le bloc de données,
- une valeur de contrôle indiquant un nombre de blocs de ressources utilisés pour le bloc de données,
- une identité de réseau (PLMN ID) ou une identité de cellule (CellIdentity) d'une cellule actuelle au sein du réseau cellulaire hébergeant la liaison,
- un identifiant global de cellule évolué représentant une combinaison d'une identité de réseau et d'une identité de cellule du réseau cellulaire hébergeant la liaison,
- une identité de cellule de couche physique du réseau cellulaire hébergeant la liaison,
- un nom de station de base hébergeant la liaison.

9. Dispositif selon l'une quelconque des revendications précédentes, dans lequel

le protocole de communication définit en outre

- plusieurs types différents de blocs de données comprenant des blocs de transport (TB) et des blocs de code (CB), et
- plusieurs types différents de sommes de contrôle correspondant aux différents types de blocs de données,

et dans lequel la partie prédéterminée des données de liaison comprend différents numéros de bloc pour des blocs de données successifs des types respectifs dans la séquence.

10. Dispositif selon l'une quelconque des revendications précédentes, dans lequel le processeur (122) est agencé

- pour obtenir un indicateur d'intégrité partagé avec la station de base, lequel indicateur d'intégrité indique si les champs de somme de contrôle comprennent la somme de contrôle ou la combinaison tronquée ; et l'unité d'intégrité est agencée, pour un bloc de données respectif, pour appliquer la protection d'intégrité conformément à l'indicateur d'intégrité en insérant la somme de contrôle dans le champ prédéterminé des champs de somme de contrôle avant de transmettre le bloc de données et en comparant une valeur dans le champ de somme de contrôle prédéterminé avec la somme de contrôle après réception du bloc de données, ou insérant la combinaison tronquée dans le champ de somme de contrôle prédéterminé avant de transmettre le bloc de données et en comparant une valeur dans le champ prédéterminé des champs de somme de contrôle avec la combinaison tronquée après réception d'un bloc de données.

11. Dispositif selon la revendication 10, dans lequel l'indicateur d'intégrité indique s'il convient d'appliquer la protection d'intégrité dans un ou plusieurs des cas suivants :

- trafic en liaison montante vers la station de base ;
- trafic en liaison descendante depuis la station de base ;

- séparé pour chaque dispositif utilisateur en communication avec la station de base ;
- séparé pour différents types de blocs de données ; et

l'unité d'intégrité est agencée, pour un bloc de données respectif, pour appliquer la protection d'intégrité conformément à l'indicateur d'intégrité.

12. Dispositif d'intégrité destiné à être utilisé dans une station de base (110) conçu pour la communication sans fil (130) dans un réseau cellulaire,

le réseau cellulaire assurant la communication sans fil à un dispositif utilisateur (120) via la station de base selon un protocole de communication,
le protocole de communication définissant

- des blocs de données sur une liaison entre la station de base et le dispositif utilisateur, les blocs de données comprenant des données utilisateur et des champs de somme de contrôle,
- des sommes de contrôle pour la détection d'erreurs dans les données utilisateur des blocs de données,
- des données de liaison concernant une séquence de blocs de données à travers la liaison, les données de liaison étant différentes pour chaque bloc de données de la séquence, et

le dispositif d'intégrité (113) comprenant

un processeur (112) conçu pour obtenir une clé d'intégrité secrète partagée avec le dispositif utilisateur ; et
une unité d'intégrité (114) pour assurer l'intégrité des données des blocs de données,

**caractérisé en ce que** l'unité d'intégrité est agencée, pour un bloc de données respectif,

- pour traiter cryptographiquement, à l'aide de la clé d'intégrité secrète, une combinaison de la somme de contrôle d'un des champs de somme de contrôle prédéterminé et d'une partie prédéterminée des données de liaison,
- pour tronquer la combinaison traitée cryptographiquement à la longueur de la somme de contrôle telle que définie par le protocole de communication, et
- pour utiliser la combinaison tronquée pour la détection d'erreurs et la protection de l'intégrité en insérant la combinaison tronquée dans l'un des champs de somme de contrôle prédéterminé avant de transmettre le bloc de données et en comparant une valeur dans l'un des champs de somme de contrôle prédéterminé avec la combinaison tronquée après réception du bloc de données.

13. Procédé d'utilisation dans un dispositif utilisateur conçu pour la communication sans fil (130) dans un réseau cellulaire,

le réseau cellulaire assurant la communication sans fil avec le dispositif utilisateur via une station de base (110) selon un protocole de communication,
le protocole de communication définissant

- des blocs de données sur une liaison entre la station de base et le dispositif utilisateur, les blocs de données comprenant des données utilisateur et des champs de somme de contrôle,
- des sommes de contrôle pour la détection d'erreurs dans les données utilisateur des blocs de données, et
- des données de liaison concernant une séquence de blocs de données à travers la liaison, les données de liaison étant différentes pour chaque bloc de données de la séquence,

le procédé comprenant l'obtention d'une clé d'intégrité secrète partagée avec la station de base et la garantie de l'intégrité des données des blocs de données, pour un bloc de données respectif,
**caractérisé par**

- un traitement cryptographique, à l'aide de la clé d'intégrité secrète, d'une combinaison de la somme de contrôle d'un champ de somme de contrôle prédéterminé et d'une partie prédéterminée des données de liaison,
- le troncage de la combinaison traitée cryptographiquement à la longueur de la somme de contrôle telle que définie par le protocole de communication, et

- l'utilisation de la combinaison tronquée pour la détection d'erreurs et la protection de l'intégrité en insérant la combinaison tronquée dans l'un des champs de somme de contrôle prédéterminé avant la transmission du bloc de données et en comparant une valeur dans l'un des champs de somme de contrôle prédéterminé avec la combinaison tronquée après la réception du bloc de données.

14. Procédé d'utilisation dans une station de base conçue pour la communication sans fil (130) dans un réseau cellulaire,

le réseau cellulaire assurant la communication sans fil à un dispositif utilisateur (120) via la station de base selon un protocole de communication,
le protocole de communication définissant

- des blocs de données sur une liaison entre la station de base et le dispositif utilisateur, les blocs de données comprenant des données utilisateur et des champs de somme de contrôle,
- des sommes de contrôle pour la détection d'erreurs dans les données utilisateur des blocs de données, et
- des données de liaison concernant une séquence de blocs de données à travers la liaison, les données de liaison étant différentes pour chaque bloc de données de la séquence,

le procédé comprenant l'obtention d'une clé d'intégrité secrète partagée avec le dispositif utilisateur ; et la garantie de l'intégrité des données des blocs de données, pour un bloc de données respectif,
**caractérisé par**

- un traitement cryptographique, à l'aide de la clé d'intégrité secrète, d'une combinaison de la somme de contrôle d'un champ de somme de contrôle prédéterminé et d'une partie prédéterminée des données de liaison,
- le troncage de la combinaison traitée cryptographiquement à la longueur de la somme de contrôle telle que définie par le protocole de communication, et
- l'utilisation de la combinaison tronquée pour la détection d'erreurs et la protection de l'intégrité en insérant la combinaison tronquée dans l'un des champs de somme de contrôle prédéterminé avant la transmission du bloc de données et en comparant une valeur dans l'un des champs de somme de contrôle prédéterminé avec la combinaison tronquée après la réception du bloc de données.

15. Produit de programme informatique pouvant être téléchargé à partir d'un réseau de communication et/ou stocké sur un support lisible par ordinateur et/ou un support exécutable par microprocesseur, le produit comprenant des instructions de code de programme pour mettre en œuvre un procédé selon les revendications 13 ou 14 lorsqu'elles sont exécutées sur un ordinateur.

**Fig. 1**

**Fig. 2**

**Fig. 3**

EP 3 644 637 B1

Fig. 4a

Fig. 4b

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010293372 A1

**Non-patent literature cited in the description**

- 3rd Generation Partnership Project; Technical Specification Group Services and System Aspects; Study on Enhanced General Packet Radio Service (EGPRS) access security enhancements with relation to cellular Internet of Things (IoT) (Release 13). *3GPP STANDARD; TECHNICAL REPORT; 3GPP TR 33.860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 23 June 2016, vol. SA WG3 (V13.1.0), 1-46
- 3rd Generation Partnership Project; Technical Specification Group Radio Access Network; Evolved Universal Terrestrial Radio Access (E-UTRA); Physical channels and modulation (Release 15). *3GPP TS 36.211 V15.2.0*, June 2018, http://www.3gpp.org/ftp//Specs/archive/36_series/36.211/36211-f20.zip
- 3rd Generation Partnership Project; Technical Specification Group Radio Access Network; Evolved Universal Terrestrial Radio Access (E-UTRA); Multiplexing and channel coding (Release 15). *3GPP TS 36.212 V15.2.1*, July 2018, http://www.3gpp.org/ftp//Specs/archive/36_series/36.212/36212-121.zip
- 3rd Generation Partnership Project; Technical Specification Group Radio Access Network; Evolved Universal Terrestrial Radio Access (E-UTRA); Physical layer procedures (Release 15). *3GPP TS 36.213 V15.2.0*, June 2018, http://www.3gpp.org/ftp//Specs/archive/36_series/36.213/36213-f20.zip

- Advanced Encryption Standard (AES). *U.S. DoC/NIST*, 26 November 2001
- Blowfish. *Sankeeth Kumar Chinta, # 991730264*, 18 September 2015, http://cs.indstate.edu/~schinta/blowfish.pdf
- **EMILIA KASPER ; PETER SCHWABE**. Faster and Timing-Attack Resistant AES-GCM. *Cryptology ePrint Archive: Report 2009/129, version 20090616:130911*, https://eprint.iacr.org/2009/129.pdf
- **PHAN, R. C.-W.** Mini Advanced Encryption Standard (Mini-AES): A Testbed for Cryptanalysis Students. *Cryptologia*, 2002, vol. 26 (4)
- Recommendation for Block Cipher Modes of Operation: Methods and Techniques. **DWORKIN, M.** NIST Special Publication. 2001, vol. 800-38A
- **JULIA BORGHO et al.** PRINCE, A Low-latency Block Cipher for Pervasive Computing Applications. *Cryptology ePrint Archive: Report 2012/529, Version: 20140612:115014*, http://eprint.iacr.org/2012/529.pdf
- *HMAC: Keyed-Hashing for Message Authentication*, February 1997, https://datatracker.ietf.org/doc/rfc2104/
- **ROGER M. NEEDHAM ; DAVID J. WHEELER**. Tea extensions. *Notes*, October 1996, http://www.cix.co.uk/~klockstone/xtea.pdf